# FASCICULE DE BREVET EUROPEEN

(11) **EP 2 581 265 B1**
(45) Date de publication et mention de la délivrance du brevet: **31.12.2014**
(21) Numéro de dépôt: 12188250.0
(22) Date de dépôt: 11.10.2012
(51) Int. Cl.: B60Q 1/072, F16C 1/12

(54) **Dispositif de commande de correcteur de portée à câbles**
Steuervorrichtung eines kabelgeführten Leuchtweitenreglers
Device for controlling a range corrector with cables

(30) Priorité: 14.10.2011 FR 1159334
(43) Date de publication de la demande: 17.04.2013
(73) Titulaire: AML Systems, 75008 Paris (FR)
(72) Inventeur: Widiez, Stéphane, 92220 BAGNEUX (FR); Aubry, Alexandre, 75012 PARIS (FR); Koulouh, Hassan, 93310 LE PRE SAINT GERVAIS (FR)
(74) Mandataire: Gevers France

(56) Documents cités:
- EP-A1- 0 931 696
- FR-A1- 2 277 697
- FR-A1- 2 822 507
- US-A- 2 919 599

## Description

Le domaine de l'invention est celui des projecteurs pour véhicules automobiles.

Un projecteur comporte une source lumineuse disposée devant un réflecteur optique, l'ensemble produisant un faisceau lumineux que bon nombre de règlementations imposent aujourd'hui de pouvoir, depuis l'habitacle, orienter à volonté, de pouvoir plus ou moins le rabattre ou le remonter, bref un faisceau dont la portée doit pouvoir être corrigée par un actionneur. On parle d'ailleurs de correction de portée.

On a longtemps utilisé comme actionneurs des correcteurs électriques comportant un moteur, avec une carte électronique, agencé pour, par l'intermédiaire d'un élément d'entraînement, entraîner en translation une tige destinée à faire basculer le réflecteur, le moteur étant commandé par un organe de commande à portée du conducteur du véhicule, généralement sur le tableau de bord. En raison du coût d'un tel moteur de correction associé à sa carte, on a proposé un dispositif de commande de correcteur actionnant un correcteur de portée grâce à des câbles et des gaines, du type des câbles de frein des bicyclettes.

Un tel dispositif de commande de correcteur de portée à câbles est commun aux deux projecteurs du véhicule et permet de contrôler la position des deux câbles, l'un étant lié à un premier projecteur par l'intermédiaire d'une première tige du correcteur et, l'autre, à un deuxième projecteur par l'intermédiaire d'une deuxième tige du correcteur. Pour agir sur le réflecteur d'un projecteur, la tige poussoir associée est souvent munie d'une extrémité sphérique, verrouillée dans le réflecteur optique, permettant de le faire basculer.

Ces dispositifs de commandes de correcteurs de portée à câbles comprennent un entraîneur sur lequel sont montés les embouts des deux câbles de sorte que chacun des deux câbles est solidaire de l'entraîneur. L'entraîneur est guidé en translation dans un boîtier du dispositif de commande et il est déplacé par un axe fileté le traversant. En extrémité de l'axe fileté est fixé un organe de commande et de réglage, généralement un bouton de commande rotatif situé sur la planche de bord, afin que l'utilisateur puisse le tourner à souhait. Le dispositif de commande comprend également deux gaines, solidaires du boîtier et servant de guides aux deux câbles. Un tel dispositif est par exemple connu du document EP 0 931 696.

L'organe de réglage est ainsi directement lié à l'axe fileté, lui même en liaison avec une surface interne taraudée de l'entraîneur située au centre de celui-ci, c'est-à-dire entre les deux câbles et traversant l'entraîneur de part en part. Cette liaison entre l'axe fileté et la surface taraudée de l'entraîneur permet ainsi de transformer le mouvement de rotation de l'organe de réglage en un mouvement de translation de l'entraîneur et donc des deux câbles.

Afin de garantir la direction du faisceau, le dispositif de commande doit assurer la précision du positionnement des deux réflecteurs et donc assurer la précision du positionnement des deux câbles. Il est donc important que le dispositif de commande maîtrise la position de chacun des câbles par rapport à leur gaine, ou au moins minimise d'éventuels défauts de positionnement d'un câble par rapport à l'autre.

Du fait de jeux existant entre le filetage de l'axe et le taraudage de l'entraîneur, un différentiel de tension des câbles peut induire une rotation de l'entraîneur autour d'un axe de rotation perpendiculaire à un plan comprenant les deux câbles et passant par le milieu de l'entraîneur. L'amplitude de cette rotation selon une direction parallèle aux câbles est plus importante au niveau d'une périphérie de l'entraîneur qu'au centre de ce dernier.

Or, du fait de la présence de l'axe fileté au centre de l'entraîneur, les câbles se situent sur une zone éloignée du centre où le différentiel de tension peut générer une différence de positionnement des câbles par rapport à leur gaine importante. La conséquence de ce différentiel de positionnement est alors un décalage de correction entre les deux projecteurs.

Il est connu, pour faire face à cet inconvénient, de proposer du frottement entre l'axe fileté et la surface taraudée de l'entraîneur afin de réduire le jeu entre ces deux surfaces et ainsi réduire la possibilité de mouvement de l'entraîneur par rapport à l'axe fileté. Un tel frottement entraîne cependant une dureté dans la rotation de l'organe de réglage et gêne par conséquent son utilisation.

Une autre solution a été apportée en proposant, dans la demande de brevet FR2277697, un dispositif selon le préambule de la revendication 1, avec un entraîneur comprenant un axe fileté inséré dans un tambour taraudé relié à l'organe de réglage. Afin d'assurer sa fonction d'entraînement des câbles, cet entraineur comprend en outre un corps, relié à l'axe fileté, dans lequel les câbles sont ancrés. L'encombrement longitudinal de l'entraîneur est donc le résultat de l'encombrement de l'axe fileté et de l'encombrement du corps recevant lesdits câbles.

La présente invention vise à améliorer la situation en cherchant à minimiser l'encombrement longitudinal global de l'entraineur.

Ainsi, l'invention de la présente demande concerne un dispositif de commande de correcteur de portée à câbles comprenant un boîtier à l'intérieur duquel se trouve un moyen d'entraînement en translation de deux câbles dans deux gaines solidaires du boîtier, ledit dispositif de commande comportant en outre un organe de réglage de position du moyen d'entraînement et un moyen de liaison coopérant avec le moyen d'entraînement et agencé pour lui transmettre un mouvement de l'organe de réglage, dispositif de commande caractérisé par le fait que le moyen d'entraînement est inséré dans le moyen de liaison, le moyen d'entraînement comprenant un filetage coopérant avec un taraudage du moyen de liaison afin d'assurer la transmission dudit mouvement de l'organe de réglage, lesdits deux câbles étant ancrés dans le moyen d'entraînement au niveau d'une zone entourée par ledit filetage.

Grâce à l'invention, le moyen de liaison ne traverse plus le moyen d'entraînement, c'est même un peu l'inverse, et il est alors possible de rapprocher les deux câbles aussi proches l'un de l'autre que le permet l'épaisseur des deux gaines dans lesquelles ils sont insérés, c'est-à-dire de les rapprocher d'une zone centrale du moyen d'entraînement bénéficiant d'une faible variation de position due aux jeux entre le moyen d'entraînement et le moyen de liaison. Un autre avantage de l'invention vient du fait qu'en rapprochant les câbles du centre du moyen d'entraînement, il est possible d'utiliser un moyen d'entraînement dont l'encombrement est diminué permettant ainsi de réduire l'encombrement du boîtier dans lequel il est inséré.

La partie du moyen d'entraînement insérée à l'intérieur de la portion du moyen de liaison se situe au niveau d'une périphérie du moyen d'entraînement. Ainsi, grâce à l'invention, la liaison entre le moyen d'entraînement et le moyen de liaison ne se fait plus au niveau d'une zone centrale du moyen d'entraînement mais au niveau d'une surface située en périphérie de ce dernier. Pour un jeu identique entre le moyen d'entraînement et le moyen de liaison, la distance entre le centre du moyen d'entraînement et la zone où se situe le jeu fait que l'amplitude du mouvement du moyen d'entraînement par rapport au boîtier selon une direction parallèle aux câbles sera inférieure dans le cas où le jeu est situé sur une périphérie du moyen d'entraînement par rapport au cas où le même jeu est situé dans une partie centrale du moyen d'entraînement.

Ledit moyen d'entraînement est ainsi vissé à l'intérieur dudit moyen de liaison. Le moyen de liaison permet de cette manière de transformer un mouvement de rotation de l'organe de réglage en un mouvement de translation du moyen d'entraînement. Le jeu entre le filetage du moyen d'entraînement et le taraudage du moyen de liaison est susceptible d'entraîner un mouvement de rotation, limité grâce à l'invention, du moyen d'entraînement autour d'un axe perpendiculaire à un plan comprenant les deux câbles et passant par le milieu du moyen d'entraînement.

Un avantage supplémentaire vient du fait qu'en positionnant les câbles au niveau d'une zone de l'entraîneur entourée du filetage, on peut réduire l'encombrement longitudinal de l'entraîneur en supprimant l'encombrement qui était associé au corps d'ancrage des câbles.

Selon un exemple de réalisation, le moyen de liaison comprend une jupe cylindrique taraudée.

Avantageusement, le moyen d'entraînement est un domino à paroi cylindrique filetée.

Selon un autre aspect de l'invention, les gaines sont fixées sur un tablier solidaire du boîtier.

Selon un autre exemple de réalisation, le moyen d'entraînement comprend une plaque, ledit boîtier comprenant des moyens de guidage en translation et de blocage en rotation de la plaque. La translation se fait parallèlement aux câbles et le blocage en rotation se fait autour d'un axe parallèle au câble. La plaque présente avantageusement un encombrement très faible selon une direction parallèle aux câbles, notamment par rapport à l'encombrement du filetage selon cette direction.

Selon un aspect de l'invention, ladite plaque vient en butée contre le moyen de liaison en fin de translation du moyen d'entraînement.

D'autres caractéristiques et avantages de l'invention apparaîtront encore mieux à la lecture de la description qui suit d'exemple de réalisation du dispositif de commande de correcteur de portée à câbles de l'invention en référence au dessin annexé, sur lequel :
- la figure 1 est une vue schématique d'un projecteur avec son réflecteur lié à la tige de basculement d'un correcteur de portée à câbles ;
- la figure 2 est une vue en perspective éclatée du dispositif de commande de correcteur de portée à câbles de l'invention et
- la figure 3 est une vue en perspective du dispositif de commande de correcteur de portée à câbles illustré à la figure 2, une fois assemblé.

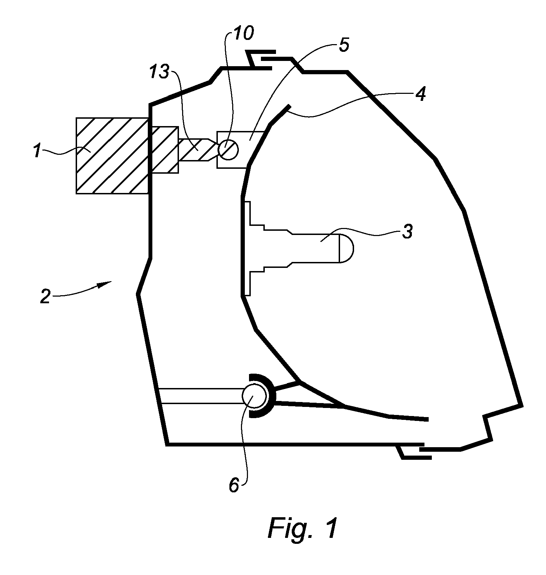

La figure 1 permet d'illustrer un correcteur de portée 1 destiné à corriger la portée du faisceau de deux projecteurs 2 dit premier et deuxième projecteur 2 (un seul des projecteurs 2 est représenté sur la figure 1). Il s'agit du faisceau produit par une source lumineuse 3 placée devant un réflecteur optique 4.

Corriger la portée implique de pouvoir rabattre ou remonter le faisceau. A cet effet, le correcteur 1 comporte une tige de basculement 13 dans chaque projecteur 2, c'est-à-dire deux tiges 13, qui sont entraînées pour faire basculer le réflecteur 4 monté pivotant sur une rotule 6 disposée dans chaque projecteur 2. Les tiges de basculement 13 du correcteur 1 comportent une extrémité d'actionnement sphérique 10 verrouillée, mais pas en rotation, dans un plot arrière 5 du réflecteur 4.

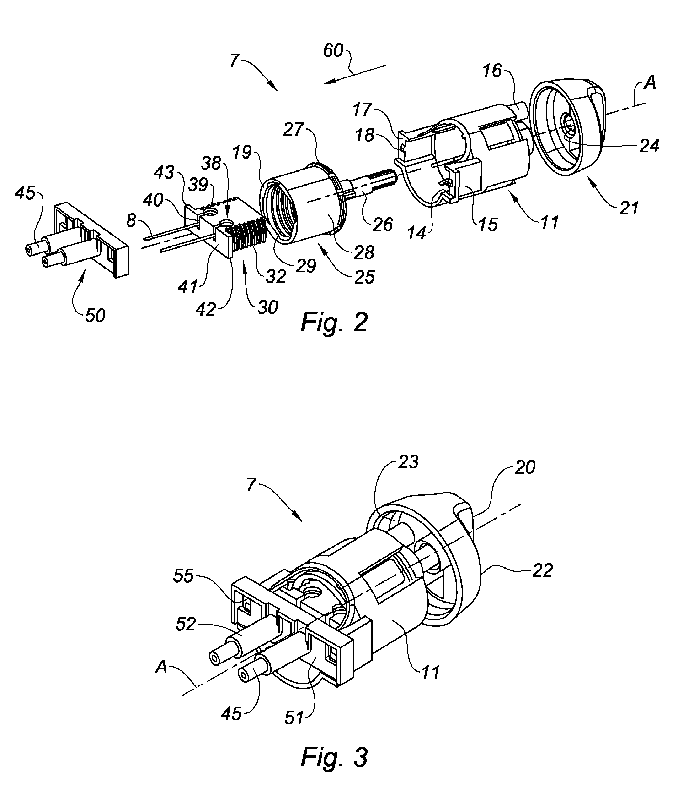

Pour entraîner en translation les deux tiges 13 et donc régler le positionnement du correcteur 1 et des projecteurs 2, un dispositif 7 de commande du correcteur de portée à câbles, illustré aux figures 2 et 3, actionne deux câbles 8 d'entraînement, un premier des deux câbles étant lié à la tige présente dans le premier projecteur, un deuxième des deux câbles étant lié à la tige présente dans le deuxième projecteur.

Dans la suite de la description, les qualifications avant, arrière, droite, gauche, supérieure et inférieure sont définies par rapport au sens de marche avant du véhicule, c'est-à-dire par rapport au sens de la flèche référencée 60 sur la figure 2.

Le dispositif 7 de commande du correcteur comprend un organe, ici un bouton rotatif 21, de réglage de position d'un moyen 30 d'entraînement des deux câbles 8, qu'on appellera entraîneur. Le bouton rotatif 21 est généralement disposé sur le tableau de bord du véhicule de sorte que l'utilisateur du véhicule puisse y accéder et l'actionner à souhait.

Le bouton rotatif 21 comprend une paroi cylindrique vidée en son intérieur et une première face 22 s'étendant perpendiculairement à la paroi cylindrique et dirigée vers l'arrière, c'est-à-dire vers l'utilisateur du véhicule, et une deuxième face 23, opposée à la première face 22 et dirigée vers l'avant. Un alésage 24 est agencé au centre de la deuxième face 23. La première face 22 comprend une nervure 20 permettant à l'usager du véhicule de tourner le bouton rotatif 21 et ainsi de régler le correcteur. Le bouton rotatif 21 est centré par rapport à un axe central A et tourne autour de celui-ci lorsqu'il est actionné.

Le dispositif 7 de commande du correcteur comprend un moyen de liaison, un lien 25, lié au bouton rotatif 21 par l'intermédiaire de l'alésage 24. Le lien 25 comprend pour cela un arbre 26 de forme cylindrique, s'insérant dans l'alésage 24 du bouton rotatif 21. L'arbre 26 et l'alésage 24 s'étendent selon l'axe central A du dispositif 7 de commande du correcteur et sont centrés par rapport à cet axe central A. Afin d'entraîner en rotation l'arbre 26, l'alésage 24 est de forme complémentaire à une extrémité distale de l'arbre 26 et comprend des faces planes coopérant avec des faces planes de l'arbre 26. Ainsi, lorsque le bouton rotatif 21 est entraîné en rotation, l'alésage 24 entraîne l'arbre 26 et donc le lien 25 dans le même mouvement. Le lien 25 est fixé en translation par rapport au bouton rotatif 21.

Le lien 25 comprend, au niveau d'une extrémité de l'arbre 26 opposée à l'extrémité distale insérée dans l'alésage 24, une jupe 27 comportant une paroi cylindrique 28 vidée en son intérieur et une face plane (non visible) s'étendant dans un plan perpendiculaire à l'arbre 26 et liée à ce dernier. La paroi cylindrique 28 est centrée par rapport à l'axe central A, elle prend naissance sur la face plane de la jupe 27, se dirige vers l'avant et se termine au niveau d'une tranche circulaire 19 s'étendant dans un plan perpendiculaire à l'axe central A. Le lien 25 est taraudé. C'est ici une face intérieure 29 de la paroi cylindrique 28 de la jupe 27 qui est taraudée.

Le lien 25 coopère avec l'entraîneur 30 dont le rôle est d'entraîner en translation les deux câbles 8 du dispositif 7 de commande du correcteur. L'entraîneur 30 est fileté au niveau d'une périphérie de ce dernier. Il prend ici la forme d'un domino comprenant des faces cylindriques filetées 32. L'entraîneur 30 comprend ainsi six faces : une gauche, une droite, une avant, une arrière, une supérieure et une inférieure. Ce sont les faces gauche et droite qui sont de forme cylindrique et filetées, les autres faces étant planes. Les faces avant et arrière sont perpendiculaires à l'axe central A, alors que les faces supérieure et inférieure sont perpendiculaires aux faces avant et arrière.

Cette configuration permet à l'entraîneur 30 d'être inséré à l'intérieur du lien 25. Les faces filetées 32 de l'entraîneur 30 coopèrent en effet avec la jupe taraudée 27 du lien 25. Le contact entre le lien 25 et l'entraîneur 30 se fait ainsi entre le filetage de l'entraîneur 30 et le taraudage du lien 25. Grâce à cette liaison filetage/taraudage, le lien 25 est agencé pour transmettre un mouvement du bouton rotatif 21 à l'entraîneur 30. Le lien 25 donne ainsi à l'entraîneur 30 un mouvement de translation à partir d'un mouvement de rotation du bouton rotatif 21. L'entraîneur 30 effectue alors une translation par rapport au lien 25 et au bouton rotatif 21 selon l'axe central A. L'homme du métier désigne l'ensemble de l'entraîneur 30 et du lien 25 « liaison hélicoïdale ».

Sur la face supérieure de l'entraîneur 30 sont situées deux évidements 38 identiques entre eux et situés de part et d'autre de l'axe central A. Chaque évidement 38 reçoit une extrémité distale d'un des deux câbles 8 autrement appelés têtes de câbles (non visible). Les évidements 38 comprennent un creux centrale 39 cylindrique et une fente 40 partant du creux central 39 et débouchant au niveau de la face avant de l'entraîneur 30. Le creux central 39 et la fente 40 des évidements 38 sont ouverts au niveau de la face supérieure de l'entraîneur 30, la fente 40 étant également ouverte au niveau de la face avant de l'entraîneur 30 de sortes que les deux câbles 8 et leur tête de câble peuvent être insérés facilement à l'intérieur des évidements 38 par la face supérieure de l'entraîneur 30. Les têtes de câble sont, par exemple, sphériques de manière à s'ancrer à l'intérieur des creux centraux 39 des évidements 38 alors qu'une partie des câbles 8 se positionne à l'intérieur des fentes 40. De cette manière, lorsque l'entraîneur 30 est entraîné en translation, il entraîne à son tour en translation les deux câbles 8.

L'entraîneur 30 comprend une plaque de butée 41 contre le lien 25. Cette plaque 41 est de forme rectangulaire et définit la face avant de l'entraîneur 30. Elle comprend deux ailes 42, 43 dites aile gauche 42 et aile droite 43. L'aile gauche 42 fait saillie par rapport à la face gauche de l'entraîneur 30 et l'aile droite 43 fait saillie par rapport à la face droite de l'entraîneur 30. De cette manière, la jupe 27 du lien peut venir buter contre la plaque 41. C'est en particulier la tranche circulaire 19 de la jupe 27 qui peut venir buter contre les ailes 42, 43 de la plaque 41.

Le lien 25 et l'entraîneur 30 sont situés à l'intérieur d'un boîtier 11 que comprend le dispositif 7 de commande du correcteur. Le boîtier 11 est fixé au véhicule dans lequel il se trouve. C'est un élément tubulaire centré sur l'axe central A de sorte qu'il entoure le lien 25, en particulier la jupe 27 du lien 25. Le boîtier 11 comprend une première extrémité située vers l'arrière, c'est-à-dire vers le bouton rotatif 21 et une deuxième extrémité située vers l'avant.

Le boîtier 11 comprend des moyens de guidage en translation et de blocage en rotation de la plaque 41. Ces moyens permettent de guider la plaque 41 et donc l'entraîneur 30 en translation selon l'axe central A tout en le bloquant en rotation autour de l'axe central A. Ces moyens de guidage prennent ici la forme de deux enfoncements 15, situés au niveau de la deuxième extrémité du boîtier 11, disposés symétriquement sur le boîtier 11 par rapport à l'axe central A et recevant les ailes 42, 43 de la plaque de butée 41. Les enfoncements 15 sont globalement de forme parallélépipédique de sorte qu'ils sont de forme complémentaire à celle des ailes 42, 43 pour permettre la translation de l'entraîneur 30 par rapport au boîtier 11 et empêcher qu'il ne soit entraîné en rotation par le lien 25. La plaque 41 vient en butée contre le lien 25 en fin de translation de l'entraîneur 30.

Le boîtier 11 comprend également un tube 16 dont le rôle est d'indexer en position le boîtier 11 dans le bouton de commande 21, par mise en appui contre la deuxième face 23 du bouton 21.

Comme vu précédemment, les câbles 8 sont ancrés dans l'entraîneur 30 et sortent de ce dernier au niveau des fentes 40. Les câbles 8 entrent ensuite dans des gaines 45 de forme cylindrique servant de guides aux câbles 8. Les gaines 45 guident en effet les câbles 8 jusqu'aux tiges du correcteur afin de les actionner en translation comme évoqué précédemment.

Les câbles 8 sont ancrés dans l'entraîneur 30 au niveau d'une zone entourée par le filetage. On entend par zone entourée par le filetage, une zone traversée par des plans perpendiculaires à l'axe de rotation A et comprenant le filetage. Une telle configuration permet avantageusement de réduire l'encombrement longitudinal de l'entraîneur 30 et donc du dispositif de l'invention.

Les gaines 45 sont fixées sur un tablier 50 solidarisé au boîtier 11. Ce tablier 50 comprend une plaque centrale 51, de forme sensiblement rectangulaire, s'étendant globalement dans un plan perpendiculaire à l'axe central A, c'est-à-dire parallèlement à la plaque de butée 41 de l'entraîneur 30. Le tablier 50 comprend également deux tubes 52, prenant naissances au niveau de la plaque centrale 51, dirigés vers l'avant et à l'intérieur desquels sont situées une partie des deux gaines 45.

Les enfoncements 15 du boîtier 11 recevant les ailes 42, 43 de la plaque de butée 41 comprennent au niveau de la deuxième extrémité du boîtier 11 une paroi plane 17 s'étendant dans un plan perpendiculaire à l'axe central A et recevant la plaque centrale 51 du tablier 50. Les enfoncements 15 comprennent aussi un épaulement 14 s'étendant dans un plan parallèle à la face inférieur de l'entraîneur 30 et sur lequel repose la plaque centrale 51 du tablier 50.

Le tablier 50 est solidarisé au boîtier 11 par l'intermédiaire d'un système d'agrafes 18 présent au niveau de la paroi plane 17 du boîtier 11. Ce système d'agrafes 18 vient s'insérer à l'intérieur d'ouvertures 55 présentes dans la plaque centrale 51 du tablier 50 afin d'agrafer le tablier 50 au boîtier 11.

Ainsi, lorsque l'usager du véhicule actionne le bouton rotatif 21, ce dernier entraîne en rotation le lien 25, situé à l'intérieur du boîtier 11, qui transmet alors ce mouvement à l'entraîneur 30 afin de l'entraîner en translation par rapport au boîtier 11. L'entraîneur 30 entraîne à son tour en translation les deux câbles 8 ancrés dans celui-ci et qui sont guidés par des gaines 45 jusqu'aux tiges 13 du correcteur 1 afin de les actionner en translation contre les réflecteurs en modifiant de la sorte la portée du faisceau lumineux.

## Revendications

1. Dispositif (7) de commande de correcteur de portée à câbles comprenant un boîtier (11) à l'intérieur duquel se trouve un moyen (30) d'entraînement en translation de deux câbles (8) dans deux gaines (45) solidaires du boîtier (11), ledit dispositif (7) de commande comportant en outre un organe rotatif (21) de réglage de position du moyen d'entraînement (30) et un moyen de liaison (25) coopérant avec le moyen d'entraînement (30) et agencé pour transformer un mouvement de rotation de l'organe de réglage (21) en un mouvement de translation du moyen d'entraînement (30), le moyen d'entraînement (30) étant inséré dans le moyen de liaison (25) et comprenant un filetage coopérant avec un taraudage du moyen de liaison (25) afin d'assurer la transformation dudit mouvement de rotation de l'organe de réglage (21) en mouvement de translation dudit moyen d'entraînement (30), dispositif (7) de commande **caractérisé par le fait que** lesdits deux câbles (8) sont ancrés dans le moyen d'entraînement (30) au niveau d'une zone entourée par ledit filetage.

2. Dispositif (7) de commande selon la revendication 1, dans lequel le moyen d'entraînement (30) comprend une plaque (41), ledit boîtier comprenant des moyens de guidage en translation et de blocage en rotation de la plaque (41).

3. Dispositif (7) de commande selon la revendication 2, dans lequel ladite plaque (41) vient en butée contre le moyen de liaison (25) en fin de translation du moyen d'entraînement (30).

4. Dispositif (7) de commande selon la revendication 2 ou 3, dans lequel la plaque (41) présente un encombrement faible par rapport à l'encombrement du filetage selon une direction parallèle aux câbles.

5. Dispositif (7) de commande selon l'une quelconque des revendications 2 à 4, dans lequel la plaque (41) est de forme rectangulaire.

6. Dispositif (7) selon l'une quelconque des revendications 2 à 5, dans lequel les moyens de guidage comprennent des enfoncements (15) recevant des ailes (42, 43) de ladite plaque (41).

7. Dispositif (7) de commande selon l'une quelconque des revendications précédentes, dans lequel le moyen de liaison (25) comprend une jupe cylindrique taraudée (27).

8. Dispositif (7) de commande selon l'une quelconque des revendications précédentes, dans lequel le moyen d'entraînement (30) est un domino à face cylindrique filetée.

9. Dispositif (7) de commande selon l'une quelconque des revendications précédentes, dans lequel les gaines (45) sont fixées sur un tablier (50) solidaire du boîtier (11).

## Patentansprüche

1. Steuervorrichtung (7) für einen Reichweitenregulierer mit Kabel, umfassend ein Gehäuse (11), in dessen Inneren sich ein Mittel (30) zum Antreiben von zwei Kabeln (8) in Translation in zwei Kanälen (45), die mit dem Gehäuse (11) fest verbunden sind, befindet, wobei die Steuervorrichtung (7) ferner ein drehbares Organ (21) zum Einstellen der Position des Antriebsmittels (30) und ein Verbindungsmittel (25) aufweist, das mit dem Antriebsmittel (30) zusammenwirkt und eingerichtet ist, um eine Drehbewegung des Einstellorgans (21) in eine Translationsbewegung des Antriebsmittels (30) umzuwandeln, wobei das Antriebsmittel (30) in das Verbindungsmittel (25) eingepasst ist und ein Außengewinde umfasst, das mit einem Innengewinde des Verbindungsmittels (25) zusammenwirkt, um die Umwandlung der Drehbewegung des Einstellorgans (21) in die Translationsbewegung des Antriebsmittels (30) sicherzustellen, wobei die Steuervorrichtung (7) **dadurch gekennzeichnet ist, dass** die zwei Kabeln (8) in dem Antriebsmittels (30) im Bereich einer Zone, die von dem Außengewinde umgeben ist, verankert sind.

2. Steuervorrichtung (7) nach Anspruch 1, wobei das Antriebsmittel (30) eine Platte (41) umfasst und wobei das Gehäuse Mittel umfasst, um die Platte (41) in der Translation zu führen und in der Drehung zu sperren.

3. Steuervorrichtung (7) nach Anspruch 2, wobei die Platte (41) am Ende der Translation des Antriebsmittels (30) gegen das Verbindungsmittel (25) zum Anschlag kommt.

4. Steuervorrichtung (7) nach Anspruch 2 oder 3, wobei die Platte (41) einen Platzbedarf aufweist, der gegenüber dem Platzbedarf des Außengewindes in einer zu den Kabeln parallelen Richtung gering ist.

5. Steuervorrichtung (7) nach einem der Ansprüche 2 bis 4, wobei die Platte (41) eine rechteckige Form hat.

6. Steuervorrichtung (7) nach einem der Ansprüche 2 bis 5, wobei die Führungsmittel Vertiefungen (15) für die Aufnahme von Schenkeln (42, 43) der Platte (41) umfassen.

7. Steuervorrichtung (7) nach einem der vorhergehenden Ansprüche, wobei das Verbindungsmittel (25) eine zylindrische Schürze (27) umfasst, die mit einem Innengewinde versehen ist.

8. Steuervorrichtung (7) nach einem der vorhergehenden Ansprüche, wobei das Antriebsmittel (30) eine Lüsterklemme mit zylindrischer Gewindefläche ist.

9. Steuervorrichtung (7) nach einem der vorhergehenden Ansprüche, wobei die Kanäle (45) an einer Stirnwand (50) befestigt sind, die fest mit dem Gehäuse (11) verbunden ist.

## Claims

1. A control device (7) for a cabled range corrector, comprising a housing (11) inside which there is a translation driving means (30) for two cables (8) within two sheaths (45) being integral with the housing (11), said control device (7) further comprising a position setting rotating member (21) for the driving means (30) and a connecting means (25) cooperating with the driving means (30) and arranged to transform a rotating movement of the setting member (21) in a translation movement of the driving means (30), the driving means (30) being inserted into the connecting means (25) and comprising a threading cooperating with a tapping of the connecting means (25) so as to guaranty the transformation of said rotating movement of the setting member (21) in a translation movement of said driving means (30), such control device (7) being **characterized by** the fact that said two cables (8) are anchored in the driving means (30) in an area surrounded by said threading.

2. The control device (7) according to claim 1, wherein the driving means (30) comprises a plate (41), said housing including translation guiding and rotation blocking means for the plate (41).

3. The control device (7) according to claim 2, wherein the plate (41) comes in abutment against the connecting means (25) at the end of the translation of the driving means (30).

4. The control device (7) according to claim 2 or 3, wherein the plate (41) has a small bulk compared to the bulk of the threading in a direction parallel to the cables.

5. The control device (7) according to any one of claims 2 to 4, wherein the plate (41) is rectangular.

6. The control device (7) according to any one of claims 2 to 5, wherein the guiding means includes recesses (15) receiving wings (42, 43) of said plate (41).

7. The control device (7) according to any of preceding claims, wherein the connecting means (25) comprises a tapped cylindrical skirt (27).

8. The control device according to any of preceding claims, wherein the driving means (30) is a socket with threaded cylindrical face.

9. The control device according to any of preceding claims, wherein the sheaths (45) are fastened on an apron (50) being integral with the housing (11).
